# EUROPEAN PATENT SPECIFICATION

(11) **EP 0 991 202 B1**
(45) Date of publication and mention of the grant of the patent: **18.12.2002**
(21) Application number: 98410112.1
(22) Date of filing: 01.10.1998
(51) Int. Cl.: H04B 3/20, H04L 27/26

(54) **Dsl transmission system with echo-cancellation**
DSL-Übertragungssystem mit Echokompensator
Système de transmission Dsl avec compensateur d'écho

(43) Date of publication of application: 05.04.2000
(73) Proprietor: STMicroelectronics S.A., 92120 Montrouge (FR); STMicroelectronics N.V., 1077 XX Amsterdam (NL)
(72) Inventor: Mestdagh, Denis J.G., 38420 Saint Martin d'Uriage (FR); Isaksson, Mikael R., 973 42 Lulea (SE); Ökvist, Göran S., 974 45 Lulea (SE)
(74) Representative: de Beaumont, Michel

(56) References cited:
- EP-A- 0 498 369
- WO-A-97/06619
- US-A- 5 317 596

## Description

The present invention relates to digital subscriber line (DSL) transmission systems which allow, in particular, high speed communication on twisted pair telephone lines. The invention relates more specifically to an echo-canceller in a discrete multi-tone (DMT) system which is intended to make bi-directional communications possible with a same subcarrier frequency.

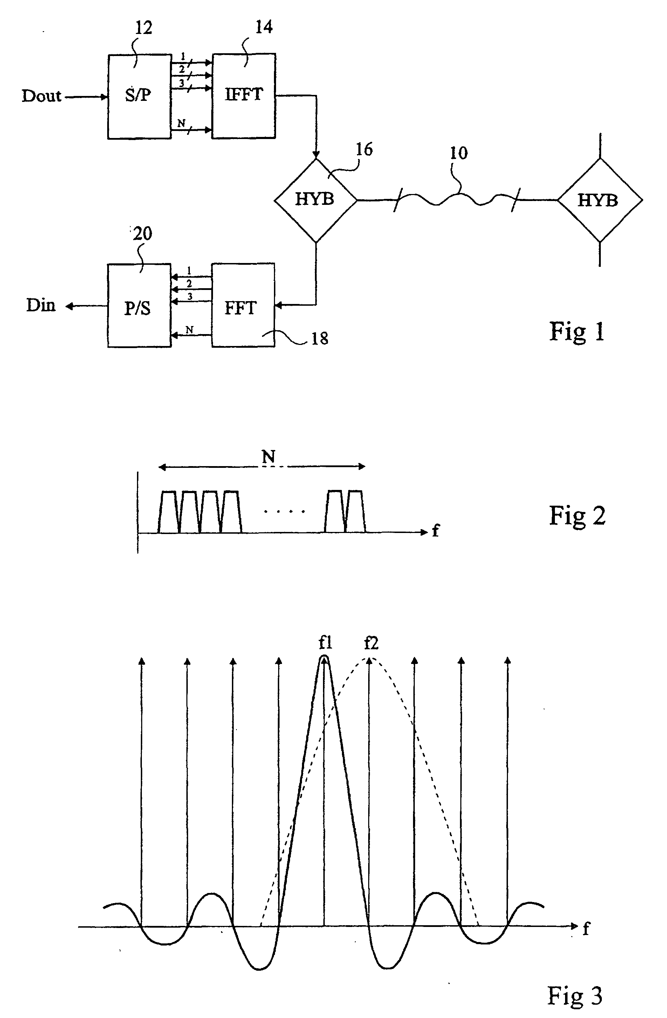

Figure 1 very schematically shows a DSL transmission system at one end of a telephone line 10. A serial stream of outgoing digital data Dout is provided to a serial-to-parallel converter 12 which extracts N multibit values, each corresponding to a frequency domain coefficient or amplitude. These frequency domain coefficients are provided to an inverse fast Fourier transform (IFFT) circuit 14 which generates, for each set of N coefficients, a time domain symbol. A symbol is thus the sum of N sinusoidal subcarriers of different frequencies, the amplitude of each subcarrier being determined by the corresponding frequency domain coefficient received by the IFFT circuit.

Each symbol is transferred onto telephone line 10 through a hybrid line interface 16. Line interface 16 also receives incoming symbols from line 10. These incoming symbols are provided to a fast Fourier transform (FFT) circuit 18 which extracts the N frequency domain coefficients of each received symbol. These frequency domain coefficients are arranged into an incoming serial data stream Din through a parallel-to-serial converter 20.

A similar structure is provided at the other end of line 10.

Figure 2 illustrates the spectrum of the signals conveyed on line 10 in such a system. The bandwidth of the telephone line is subdivided in N channels, each corresponding to one frequency domain coefficient as processed by the IFFT and FFT circuits. In practice, there are N = 2048 channels, each having a bandwidth of 5 kHz. The first frequency domain coefficients may be 11 bits wide and thus correspond to 2048 different amplitudes/phases in the time domain. Because of the attenuation undergone by the higher frequencies on the telephone line, the last frequency domain coefficients may only be two bits wide.

A gap shown in figure 2 at the beginning of the spectrum is reserved for "plain old telephone services" (POTS).

Figure 3 shows the spectrum of one subcarrier f1 conveyed in a symbol. This spectrum is not a discrete value at f1 because the length of the symbol is finite. As an example, the spectrum has a sin(x)/x (sinc) function shape. To avoid the interference of the lobes of this spectrum with nearby channels, the subcarriers are chosen to be "orthogonal". This means, as shown, that the distance between subcarriers is chosen so that each subcarrier is at a zero crossing of the sinc functions. The sinc functions only depend on the constant symbol width and thus have a constant pseudo period and all have zero values at the same frequencies.

Ideally, such a transmission system could allow each channel to be used for simultaneous bi-directional transmissions, i.e. in full duplex. However, this is in practice made very difficult due to near-end echo problems. Indeed, the hybrid line interface 16 will always add part of the outgoing signal to the incoming signal arriving at FFT circuit 18. Since the incoming signal is usually attenuated, this near-end echo would make the incoming signal unusable. Several solutions have been devised to avoid this problem.

A first widespread solution consists in using the channels only for unidirectional communication, whereby, in theory, near-end echoes of outgoing symbols occur in channels not used for the incoming symbols. In practice, there is a main difficulty in implementing this solution, as explained below.

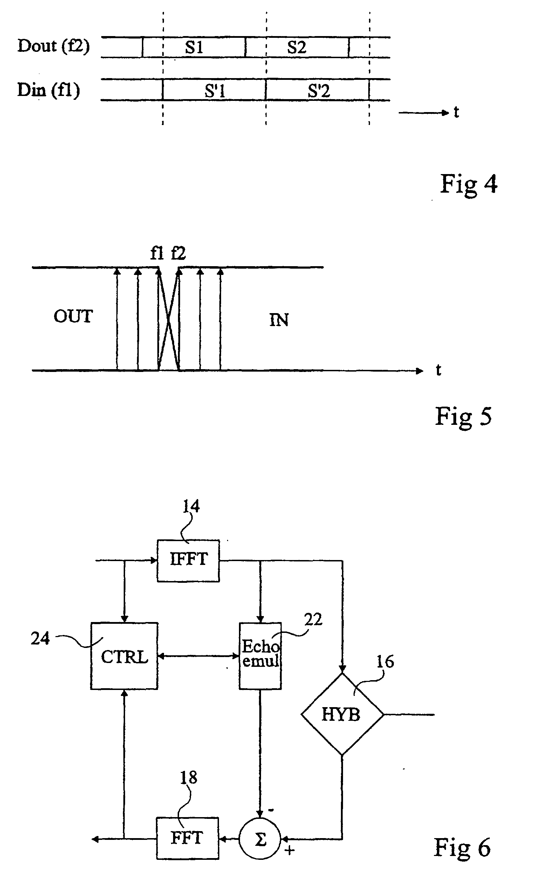

Figure 4 shows a stream of outgoing symbols S1, S2... on line 10, and a stream of incoming symbols S'1, S'2... For clarity reasons, it is supposed that the incoming symbols convey only one subcarrier f2 and the outgoing symbols convey only one subcarrier f1, the subcarriers f1 and f2 being adjacent. As shown, the incoming and outgoing symbols are not synchronized, the phase-shift depending essentially on the characteristics of the telephone line 10. The FFT circuit 18 synchronizes its sampling on the incoming symbols, as shown by dotted lines. While each incoming symbol is sampled by FFT circuit 18, the echo of the outgoing signal is also sampled.

Due to the phase-shift between the incoming and outgoing symbols, the transitions between the outgoing symbols will be sampled in the echoes. Such transitions are discontinuities which have a wide spectrum in the frequency domain. This is shown in figure 3 by dotted lines for subcarrier f2. This wide spectrum affects all the nearby channels.

Figure 5 illustrates a conventional solution for avoiding the effects of the wide spectrum of the near-end echo. This solution is implemented, for example, in asymmetric DSL systems (ADSL). The solution consists in using the first channels for communication in one direction, for example outgoing, and all the remaining channels for communication in the other direction, for example incoming. In ADSL systems, the incoming bandwidth is larger than the outgoing bandwidth, whereby more channels are used for incoming communication than for outgoing communication.

In figure 5, subcarriers f1 and f2 are respectively the last used for outgoing communication, and the first used for incoming communication. The echo problems mentioned above occur in the channels around f1 and f2. To avoid them, the incoming signal is high-pass-filtered while the outgoing signal is low-pass-filtered, both filters having steep slopes between frequencies f1 and f2.

US 5 317 596 describes a method and apparatus for echo cancellation with discrete multitone modulation using an echo canceller operating in both the frequency and time domains.

European patent application 0 498 369 discloses a DSL system allowing full duplex communication in each channel. This solution thus uses a near-end echo canceller for suppressing the echo of the outgoing signal in the incoming signal.

Figure 6 schematically shows this echo-canceller. The output of the IFFT circuit 14 is provided to an echo-emulator 22, the output of which is subtracted from the incoming signal provided by the line interface 16 before it is processed by FFT circuit 18. The echo-emulator 22 is a tapped delay line performing a convolution in the time domain. It is intended to reproduce the behavior of the line interface 16. The behavior of this line interface 16 is complex and depends on many variable parameters. The echo-emulator 22 is adjusted according to the operating conditions by a control circuit 24 which analyzes the frequency domain coefficients provided to IFFT circuit 14 and produced by FFT circuit 18.

This solution is particularly complex and its efficiency depends on the quality of the echo-emulation which will always be an approximation.

An object of the invention is to provide a DSL transmission system with a particularly simple, nonetheless reliable, echo-cancellation.

This object is achieved by digital subscriber line transmission system comprising an inverse fast Fourier transform circuit receiving N digital outgoing values as frequency domain coefficients; a fast Fourier transform circuit receiving a time domain signal and providing N digital frequency domain coefficients as incoming values; a line interface coupling the IFFT and the FFT circuits to a subscriber line; and a circuit for inserting a cyclic suffix at the end of each symbol, wherein a symbol is a portion of the time domain signal corresponding to N outgoing values. The system comprises an echo-canceller arranged for subtracting from each incoming value the respective outgoing value multiplied by a respective constant scaling factor.

According to an embodiment of the invention, the echo-canceller comprises adjustment means arranged for sending out a non-zero value for each frequency domain coefficient and adjusting the respective scaling factor to cancel the corresponding incoming value.

According to an embodiment of the invention, the system comprises a serial-to-parallel converter for converting a serial outgoing data stream in said outgoing values and a parallel-to-serial converter for converting said incoming values in a serial incoming data stream, wherein the echo-canceller comprises a single multiplier and a single adder acting on the serial data streams.

According to an embodiment of the invention, the system uses an error correction mechanism and the adjustment means are arranged for varying each scaling factor in order to reduce the number of repetitive errors occurring in corresponding incoming values.

According to an embodiment of the invention, the system is implemented in at least one of several modems controlling one end of a bundle of subscriber lines. The echo canceller is arranged to also subtract from each incoming value the respective outgoing values of the other modems, multiplied by respective scaling factors.

These objects, features, aspects and advantages of the invention will become apparent from the following detailed description of embodiments, given by way of illustration and not of limitation with reference to the accompanying drawings.
Figure 1, previously described, schematically shows a DSL transmission system;
figure 2 illustrates a subdivision of the telephone line bandwidth in several channels used in DSL systems;
figure 3 illustrates the spectrum of a sampled subcarrier and of a near-end echo;
figure 4 illustrates incoming and outgoing symbols on a telephone line;
figure 5 illustrates an ADSL transmission method;
figure 6 schematically shows a conventional echo-canceller used in a DSL system;
figure 7 illustrates incoming and outgoing symbols on a telephone line in a specific DSL system which is used for carrying out the invention;
figure 8 schematically shows a first embodiment of an echo-canceller according to the invention; and
figure 9 shows a second embodiment of an echo-canceller according to the invention.

The invention exploits a principle used in a specific DSL system disclosed in PCT patent application WO 97/06619. This specific DSL system is of the type where each channel is used in a single communication direction. It enables the communication direction of each channel to be independently selected. The purpose of this system is to cancel near-end crosstalk generated in a cable bundling several telephone lines using different communication systems, this by conveniently choosing the communication directions of the channels.

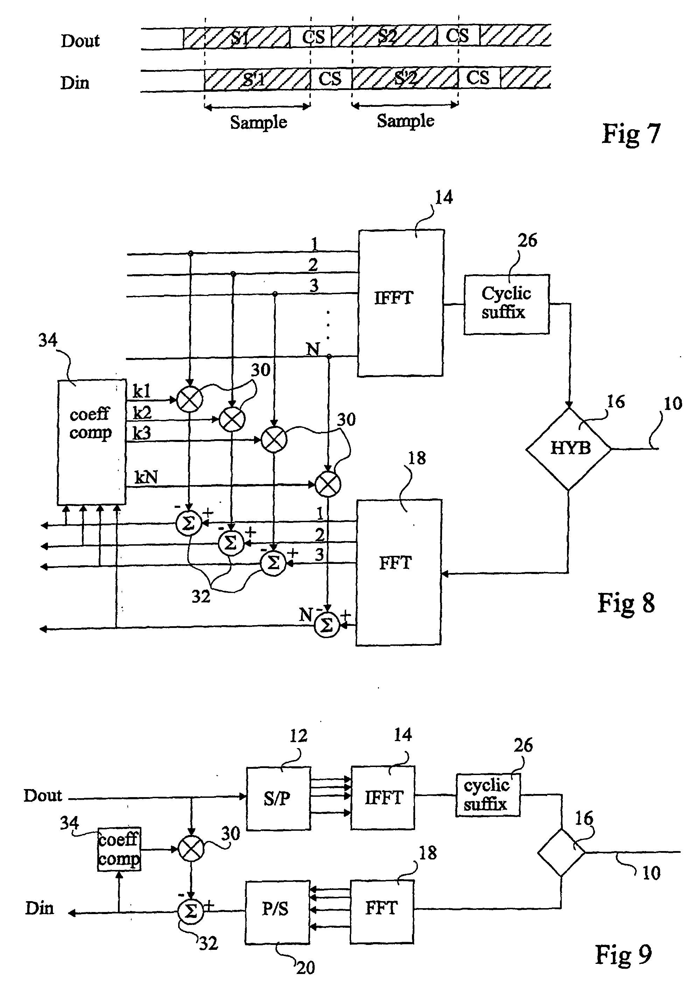

Figure 7 illustrates the principle used in the above-mentioned DSL system. As previously mentioned, if two adjacent channels are used for communications in different directions, the outgoing signal on one channel generates a wide spectrum echo which adversely affects the incoming signal in the other channel. This wide spectrum echo is generated due to the fact that, while an incoming symbol is sampled, a discontinuous echo comprising a transition between two outgoing symbols is also sampled.

In figure 7, in order to avoid this, each symbol is extended by a cyclic suffix CS which is longer than the phase-shift between the incoming and outgoing symbols. This cyclic suffix is a simple copy of the first fraction of the corresponding symbol. (The cyclic suffix mentioned here should not be mistaken with the "cyclic prefix" mentioned in European patent application 0 498 369, which corresponds to an end-portion of each symbol placed in front of the symbol. These cyclic prefixes are intended to eliminate intersymbol interference in the far-end receiver by providing a guard period during which the propagation transients of the line may decay.)

As shown, the incoming symbols are sampled outside the cyclic suffixes CS. In this manner, the system samples the echo of a portion of each outgoing signal followed by a portion of the cyclic suffix CS, and does not see a transition between two symbols. The transition between a symbol and its cyclic suffix is not seen by a fast Fourier transform as a discontinuity, i.e. each subcarrier conveyed in a symbol is continued in the cyclic suffix with the same amplitude. As a consequence, each subcarrier in the sampled echo remains orthogonal, i.e. has the sinc-shaped spectrum shown in continuous line in figure 3 and not the wide spectrum shown in dotted line.

An essential aspect of the invention is to note that, by using the cyclic suffixes described above, it is possible to efficiently cancel the echoes in a very simple manner in the frequency domain. Indeed, each frequency domain coefficient provided by the FFT will be a "pure" coefficient, i.e. it will only reflect the corresponding subcarrier in the incoming symbol and in the echo, and not spurious frequency components injected by discontinuities of nearby subcarriers. Therefore, to cancel the echo in the frequency domain, it is sufficient to subtract each outgoing frequency domain coefficient from the corresponding incoming frequency domain coefficient, eventually applying a constant scaling factor reflecting the transfer function of the line interface 16.

By achieving an efficient echo-cancellation, each channel may be used in full duplex mode, which will normally double the throughput of the communication line. If each channel is used in full duplex mode, the aim of the above PCT patent application WO 97/06619 is no longer obtained, i.e. it is no longer possible to cancel near-end crosstalk by suitably choosing the transmission directions of the channels. However, the gain obtained by using each channel in full duplex mode may largely compensate the loss due to near-end crosstalk. Moreover, as will be disclosed later, the invention may be adapted to also cancel such near-end crosstalk.

Figure 8 shows a first embodiment of an echo-canceller according to the invention. Same elements as those shown in figure 2 are designated with same reference characters. The cyclic suffix mentioned above is inserted by a circuit 26 placed between IFFT circuit 14 and line interface 16. Circuit 26 will normally operate on digital signals, these signals being converted into analog before they are applied to line interface 16.

As mentioned above, each component provided to IFFT circuit 14 is multiplied by a respective scaling factor k at 30 and then subtracted at 32 from the respective frequency component provided by FFT circuit 18.

The scaling factors k are normally constant and depend on the specific installation, especially line interface 16. These scaling factors are provided by a computation circuit 34 which determines the coefficients during an initialization phase. Such an initialization phase may consist, before any data is received on line 10, in providing a non-zero value on each of the inputs of IFFT circuit 14 and in adjusting the scaling factors so that a zero value is obtained after subtraction at each output of FFT circuit 18. This adjustment phase is particularly simple because each output of FFT circuit 18 is affected by only its respective scaling factor.

Figure 8 is intended to clearly show the principle of the invention. However, it does not correspond to an efficient practical realization because it needs a great number of multipliers and adders (one pair for each communication channel).

Figure 9 shows a practical embodiment using a single multiplier 30 and a single adder 32. The echo-canceller is arranged here to act on the serial data streams Dout and Din, upstream the serial-to-parallel converter 12 and downstream the parallel-to-serial converter 20, respectively. The scaling factor computation circuit 34, instead of providing in parallel all the scaling factors k, will provide them one after the other to the single multiplier 30 in synchronism with the data streams.

Normally, the scaling coefficients determined during the initialization phase remain constant during the following communication phase. However, if the communication phase is long enough, the system may be subjected to temperature variations, for example, which alter the transfer function of line interface 16, in particular. In this case, the scaling factors would have to be readjusted.

Such a readjustment could be realized by regularly achieving an initialization phase.

Another solution, since such communication systems use error correction codes, is to analyze the errors occurring and readjust the scaling factors if certain types of errors occur repetitively. More specifically, if the errors indicate that the incoming values through a given channel are systematically too small, for example, this means that the corresponding scaling factor is too large and should be reduced. The scaling factor is then progressively reduced until such errors disappear or are at least no longer systematic.

Such a dynamic scaling factor adjustment is again particularly simple because a scaling factor is only correlated to its respective channel, and it is easy to determine from the error correction algorithms in which channels errors occur.

As mentioned above, the invention may also cancel near-end crosstalk. Recall that near-end crosstalk occurs between subscriber lines of a same bundle. It is the influence between outgoing signals on one line and incoming signals on adjacent lines at the same side of the bundle. According to the invention, from each incoming value provided by FFT circuit 18 in one modem, is subtracted each corresponding outgoing value of each modem on the same side of the bundle. The symbols conveyed on the different lines of the bundle need not be synchronized, provided that the symbols have the above mentioned cyclic suffix.

For example, referring again to figure 9, the adder 32 of one modem receives the outgoing values of the same modem, and would also receive the outgoing values of the other modems scaled by respective factors. The scaling factors may be adjusted as described above. Of course the digital data flows on which adder 32 thus operates should be synchronous, but this is usually the case since the modems controlling the lines of a same bundle are generally on a same circuit board or backplane.

## Claims

1. Digital subscriber line transmission system comprising:
- an inverse fast Fourier transform (IFFT) circuit (14) receiving N digital outgoing values as frequency domain coefficients;
- a fast Fourier transform (FFT) circuit (18) receiving a time domain signal and providing N digital frequency domain coefficients as incoming values; and
- a line interface (16) coupling the IFFT and the FFT circuits to a subscriber line (10); said system **characterized in that** it further comprises:
- a circuit (26) for inserting a cyclic suffix (CS) at the end of each symbol, wherein a symbol is a portion of the time domain signal corresponding to N outgoing values; and
- an echo-canceller arranged for subtracting from each incoming value the respective outgoing value multiplied by a respective scaling factor (k), the echo-canceller operating exclusively in the frequency domain, the scaling factors remaining normally constant during the communication phase.

2. The system of claim 1, **characterized in that** the echo-canceller comprises adjustment means (34) arranged for sending out a non-zero value for each frequency domain coefficient and adjusting the respective scaling factor to cancel the corresponding incoming value.

3. The system of claim 1, **characterized in that** it comprises a serial-to-parallel converter (12) for converting a serial outgoing data stream (Dout) in said outgoing values and a parallel-to-serial converter (20) for converting said incoming values in a serial incoming data stream (Din), wherein the echo-canceller comprises a single multiplier (30) and a single adder (32) acting on the serial data streams.

4. The system of claim 2, comprising an error correction system, wherein said adjustment means (34) are arranged for varying each scaling factor in order to reduce the number of repetitive errors occurring in corresponding incoming values.

5. The system of claim 1 implemented in at least one of several modems controlling one end of a bundle of subscriber lines, wherein the echo canceller is arranged to also subtract from each incoming value the respective outgoing values of the other modems, multiplied by respective scaling factors.

## Patentansprüche

1. Digitales Übertragungssystem über Teilnehmerleitungen (DSL-Übertragungssystem) mit
- einer Schaltung (14) zur inversen schnellen Fourier-Transformation (IFFT), die N digitale Ausgangswerte als Frequenzbereichskoeffizienten empfängt;
- einer Schaltung (18) zur schnellen FourierTransformation (FFT), die ein Zeitbereichssignal empfängt und N digitale Frequenzbereichskoeffizienten als Eingangswerte liefert; und
- einer Leitungsschnittstelle (16), die die IFFTund die FFT-Schaltung miteinander zu einer Teilnehmerleitung (10) verkoppelt, wobei das System **dadurch gekennzeichnet ist, dass** es ferner aufweist:
- eine Schaltung (26) zum Anfügen eines zyklischen Suffixes (CS) am Ende eines jeden Symbols, wobei ein Symbol ein Teil des Zeitbereichsignals entsprechend N Ausgangswerten ist; und
- einen Echounterdrücker, der ausgelegt ist, von jedem Eingangswert den entsprechenden Ausgangswert, jeweils multipliziert mit einem entsprechenden Skalierungsfaktor (k) zu subtrahieren, wobei der Echounterdrücker ausschließlich in dem Frequenzbereich arbeitet und die Skalierungsfaktoren normalerweise während der Kommunikationsphase konstant bleiben.

2. System nach Anspruch 1, **dadurch gekennzeichnet, dass** der Echounterdrücker Einstelleinrichtungen (34) aufweist, die ausgelegt sind, einen Nicht-Null-Wert für jeden Frequenzbereichskoeffizienten auszusenden und den jeweiligen Skalierungsfaktor einzustellen, um den korrespondierenden Eingangswert zu unterdrücken.

3. System nach Anspruch 1, **dadurch gekennzeichnet, dass** es einen Seriell/Parallel-Wandler (12) zum Wandeln eines seriellen Ausgangsdatenstromes (Dout) in den Ausgangswerten und einen Parallel/Seriell-Wandler (20) aufweist zum Wandeln der Eingangswerte in einem seriellen Eingangsdatenstrom (Din), wobei der Echounterdrücker einen einzigen Multiplizierer (30) und einen einzigen Addierer (32) aufweist, die auf die seriellen Datenströme wirken.

4. System nach Anspruch 2, das ein Fehlerkorrektursystem aufweist, wobei die Einstelleinrichtungen (34) zum Variieren jedes Skalierungsfaktors ausgelegt sind, um die Anzahl von wiederholten, in korrespondierenden Eingangswerten auftretenden Fehlern zu reduzieren.

5. System nach Anspruch 1, das in zumindest eines von mehreren Modems implementiert ist, das ein Ende eines Bündels von Teilnehmerleitungen steuert, wobei der Echounterdrücker ausgelegt ist, von jedem Eingangswert auch die entsprechenden Ausgangswerte der anderen Modems, multipliziert jeweils mit entsprechenden Skalierungsfaktoren, zu subtrahieren.

## Revendications

1. Système de transmission de ligne d'abonné numérique comprenant :
- un circuit de transformée de Fourier rapide inverse (IFFT) (14) recevant N valeurs numériques de sortie en tant que coefficients du domaine fréquentiel ;
- un circuit de transformée de Fourier rapide (FFT) (18) recevant un signal du domaine temporel et fournissant N coefficients du domaine fréquentiel en tant que valeurs d'entrée ; et
- une interface de ligne (16) couplant les circuits IFFT et FFT à une ligne d'abonné (10) ;
ce système étant **caractérisé en ce qu'**il comprend en outre :
- un circuit (26) d'insertion d'un suffixe cyclique (CS) à la fin de chaque symbole, dans lequel un symbole est une partie du signal du domaine temporel correspondant à N valeurs de sortie ; et
- un annuleur d'écho disposé pour soustraire de chaque valeur entrante la valeur sortante respective multipliée par un facteur d'échelle respectif (k), l'annuleur d'écho fonctionnant uniquement dans le domaine fréquentiel, les facteurs d'échelle demeurant normalement constants pendant la phase de communication.

2. Système selon la revendication 1, **caractérisé en ce qu'**il comprend des moyens de réglage (34) disposés pour envoyer une valeur non nulle pour chaque coefficient du domaine fréquentiel et régler le facteur d'échelle respectif pour annuler la valeur d'entrée correspondante.

3. Système selon la revendication 1, **caractérisé en ce qu'**il comprend un convertisseur série-parallèle (12) pour convertir un flux de données de sortie série (Dout) en lesdites valeurs de sortie et un convertisseur parallèle-série (20) pour convertir lesdites données d'entrée en un flux de données d'entrée série (Din), dans lequel l'annuleur d'écho comprend un seul multiplieur (30) et un seul additionneur (32) agissant sur les flux de données série.

4. Système selon la revendication 2, comprenant un système de correction d'erreur, dans lequel les moyens de réglage (34) sont disposés pour faire varier chaque facteur d'échelle pour réduire le nombre d'erreurs répétitives se produisant dans les valeurs d'entrée correspondantes.

5. Système selon la revendication 1, mis en oeuvre dans au moins un de plusieurs modems commandant une extrémité d'un faisceau de lignes d'abonné, dans lequel l'annuleur d'écho est disposé pour soustraire également de chaque valeur d'entrée les valeurs de sorties respectives des autres modems, multipliées par des facteurs d'échelle respectifs.
